# EUROPÄISCHE PATENTANMELDUNG

(11) **EP 1 782 873 A1**
(43) Veröffentlichungstag der Anmeldung: **09.05.2007**
(21) Anmeldenummer: 06012105.0
(22) Anmeldetag: 13.06.2006
(51) Int. Cl.: B01D 29/11, B01D 29/09, B01D 33/056

(54) **Filtervorrichtung**

(30) Priorität: 24.09.2005 DE 102005046298
(71) Anmelder: Hydac Process Technology GmbH, 66280 Sulzbach/Saar (DE)
(72) Erfinder: Wnuk, Ralf, Dr., 66450 Bexbach (DE); Olschok, Markus, 66540 Neunkirchen (DE); Sauer, Jürgen, 66539 Neunkirchen (DE)
(74) Vertreter: Bartels & Partner

(57) **Zusammenfassung**

Eine Filtervorrichtung mit einem bahnförmigen Filtermaterial (15), das in einer ersten Station (11) von einem Vorrat (17) erhältlich und in einer zweiten Station (13) zu einem Filterschlauch (23) fügbar ist, in den über eine Zuführstation (27, 29) das zu filtrierende Medium zuführbar ist, weist eine weitere Station (31) auf, in der der Filterschlauch (23) zusammen mit den abfiltrierten Rückständen zur weiteren Entsorgung handhabbar ist.

## Beschreibung

Die Erfindung bezieht sich auf eine Filtervorrichtung mit einem bahnförmigen Filtermaterial.

Derartige Filtervorrichtungen sind bekannt, beispielsweise als Bandfiltereinrichtungen in Form sogenannter Schwerkraftfilter. Ein Vorteil solcher Filtervorrichtungen besteht darin, dass eine verhältnismäßige große Filterfläche zur Verfügung gestellt werden kann und dass eine hohe Filterfeinheit gewährleistet werden kann, so dass solche Filtervorrichtungen auch für eine Feinfilterung fluider Medien benutzt werden kann.

Andererseits ist bei derartigen Vorrichtungen die Handhabung des benutzten Filtermaterials, also des Filterbandes mit daran anhängenden abfiltrierten Rückständen, problematisch. Das Abführen des benutzten Filterbandes aus der Vorrichtung muss so erfolgen, dass keine Gefahr der Kontaminierung der Umgebung oder des Reinfiltrats durch vom Filterband abfallende Rückstände erfolgen kann. Um dies zu gewährleisten, ist bei bekannten Filtervorrichtungen ein erheblicher konstruktiver Aufwand erforderlich.

Ausgehend von diesem Stand der Technik stellt sich die Erfindung die Aufgabe, eine mit einem bahnförmigen Filtermaterial betreibbare Filtervorrichtung zur Verfügung zu stellen, bei der trotz einfacher Bauweise eine sichere und einfache Handhabung des benutzten Filtermaterials ermöglicht ist.

Erfindungsgemäß ist diese Aufgabe durch eine Filtervorrichtung gelöst, die die Merkmale des Patentanspruches 1 in seiner Gesamtheit aufweist.

Dadurch, dass erfindungsgemäß in der Filtervorrichtung eine Einrichtung enthalten ist, in der das bahnförmige Filtermaterial in die Form eines Filterschlauches gebracht wird, in den das zu filtrierende Medium zugeführt wird, setzen sich beim Filtrationsvorgang die abfiltrierten Rückstände an der Innenseite des Filterschlauches ab. Der Austrag des benutzten Filtermaterials und der abfiltrierten Rückstände gestaltet sich dadurch besonders einfach und, ohne dass die Gefahr einer Kontaminierung durch die Rückstände gegeben ist, in problemloser Weise, weil der Filterschlauch zusammen mit den in seinem Inneren befindlichen Rückständen aus der Vorrichtung entfernt werden kann.

Bei vorteilhaften Ausführungsbeispielen ist die Anordnung so getroffen, dass die erste Station den Vorrat des Filtermaterials in Form eines Filterbandwikkels enthält, von dem das Filterband abwickelbar und der zweiten Station zuführbar ist.

Bei dem Filterband kann es sich um eine folienartige Kunststoffmembran mit für den jeweiligen Filtriervorgang passend gewählter Permeabilität oder Porosität handeln.

Die zweite Station, der das vom Vorrats-Filterbandwickel der ersten Station abgewickelte Filterband zugeführt, kann eine Bandführung aufweisen, die das in seiner Längsrichtung zugeführte Filterband wölbt und dessen Längsränder zur Bildung des Filterschlauches einander annähert.

Hierbei kann die Anordnung so getroffen sein, dass die Zuführstation für das zu filtrierende Medium eine an der zweiten Station befindliche Ausgabeeinrichtung aufweist, über die das zu filtrierende Medium in dem Bereich zugeführt wird, in dem das Filterband durch Annähern seiner Längsränder zum Filterschlauch geformt wird, oder über die das Medium in dem Bereich zugeführt wird, in dem das Filterband durch die Bandführung gewölbt wird. In dem letztgenannten Bereich entsteht stromaufwärts der Vereinigungsstelle der Längsränder eine Art Eingangstrichter über den das Medium in das Innere des Filterschlauches einströmbar ist.

Vorzugsweise ist die Anordnung so getroffen, dass der Filterschlauch auf seinem Weg zwischen der zweiten Station und der für die Handhabung des die abfiltrierten Rückstände enthaltenden Filterschlauches vorgesehenen weiteren Station derart geführt ist, dass der Filterschlauch im Anschluss an die zweite Station einem nach unten gerichteten Bahnverlauf folgt, so dass das zugeführte, zu filtrierende Medium durch Schwerkrafteinfluss in den geneigten Abschnitt des Filterschlauches einströmt.

Um die Vorschubbewegung des Filterbandes und des daraus gebildeten Filterschlauches zu erzeugen, kann die für die Handhabung des die abfiltrierten Rückstände enthaltenden Filterschlauches vorgesehene weitere Station eine Antriebseinrichtung aufweisen, die die Transportbewegung des Filterbandes und des Filterschlauches von der ersten Station und durch die zweite Station hindurch erzeugt.

Zu diesem Zweck kann eine die Transportbewegung erzeugende Aufwickeleinrichtung für den Filterschlauch vorgesehen sein. Ein derartiges Ausführungsbeispiel zeichnet sich durch eine besonders einfache Bauweise aus, weil ein und dieselbe Einrichtung sowohl die Antriebs- und Transportfunktion erfüllt als auch eine besonders einfache Handhabung des benutzten Filterschlauches zur Entsorgung gewährleistet, weil der Filterschlauch zusammen mit den in ihm enthaltenen abfiltrierten Rückständen als Einheit in Form eines Wickels der Vorrichtung entnommen werden kann.

Um eine Verbindung zwischen den Längsrändern des Filterbandes, welche zur Bildung des Filterschlauches in der zweiten Station aneinander angenähert werden, herzustellen, kann in dieser zweiten Station eine Verbindungseinrichtung vorgesehen sein, bei der es sich um eine Schweißvorrichtung handeln kann, mittels deren die Längsränder des Filtermaterials miteinander verschweißbar sind, wenn es sich bei dem Filterband um ein siegelbares Material handelt oder ein Material, das zumindest an den Längsrändern siegelbare Bereiche aufweist.

Alternativ kann die Verbindungseinrichtung eine Einrichtung zur Bildung einer Verklebung oder Verklammerung oder einer Haftverbindung an den Längsrändern des Filterbandes aufweisen.

Gegenstand der Erfindung ist auch ein Filtermaterial, das insbesondere für eine Verwendung bei einer Filtervorrichtung gemäß einem der Ansprüche 1 bis 9 vorgesehen ist und das die Merkmale des kennzeichnenden Teiles des Patentanspruches 10 aufweist.

Nachstehend ist die Erfindung anhand eines in der Zeichnung dargestellten Ausführungsbeispieles im einzelnen erläutert. Es zeigen:
- Fig. 1 eine stark schematisch vereinfacht gezeichnete perspektivische Schrägansicht eines in einen tankartigen Fluidbehälter integrierten Ausführungsbeispieles der erfindungsgemäßen Filtervorrichtung;
- Fig. 2 eine gegenüber Fig. 1 vergrößert gezeichnete, perspektivische Schrägansicht nur des Eingangsbereiches des Beispieles von Fig. 1, d. h. des Bereiches, in dem die Zufuhr des zu filtrierenden Mediums erfolgt, und
- Fig. 3 eine gegenüber Fig. 2 in kleinerem Maßstab gezeichnete, das Ausführungsbeispiel in in Längsrichtung aufgeschnittener Darstellung und schematisch stark vereinfacht zeigende perspektivische Schrägansicht.

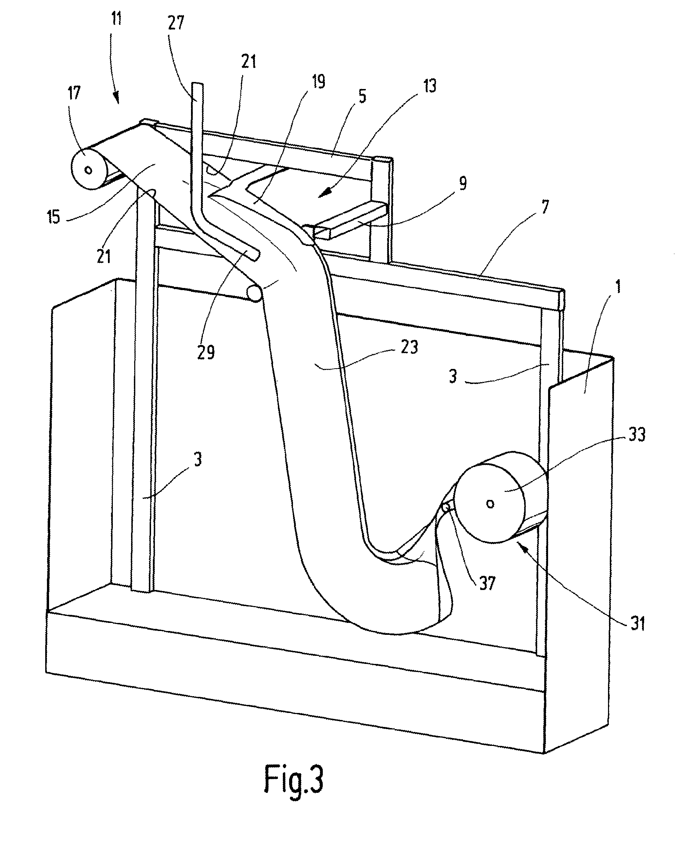

In den Fig. ist die Erfindung anhand eines Ausführungsbeispieles erläutert, bei dem die Filtervorrichtung einem das Reinfiltrat aufnehmenden, tankartigen Behälter 1 zugeordnet ist. Ein im Behälter 1 stehendes Vorrichtungsgestell mit Ständerbeinen 3, Längsträgern 5 und 7 sowie Querträgern 9 bildet in einem über die Oberseite des Behälters 1 nach oben vorstehenden Bereich den Träger für eine erste Vorrichtungsstation 11 sowie eine zweite Vorrichtungsstation 13, siehe Fig. 3. Die erste Station 11 ist eine Vorratsstation, die einen Vorrat bahnförmigen Filtermaterials in Form eines flachen Filterbandes 15 enthält, das zu einem am Vorrichtungsgestell drehbar gelagerten Filterbandwickel 17 aufgewickelt ist.

Das vom Filterbandwickel 17 abzuwickelnde Filterband 15 ist mit schräg nach unten verlaufender Bahnrichtung zu der ebenfalls oberhalb des oberen Randes des Behälters 1 gelegenen zweiten Station 13 geführt, bei der es sich um eine Formungsvorrichtung handelt, in der das zugeführte, flache Filterband 15 eine Bandführung 19 trichterartig gewölbter Form durchläuft (in Fig. 3 ist nur eine Führungshälfte sichtbar), wodurch das Filterband 15 so gewölbt wird, dass dessen einander gegenüberliegende Längsränder 21 einander angenähert werden, so dass aus dem flachen Filterband 15 ein Filterschlauch 23 gebildet wird. Wie am deutlichsten aus Fig. 3 zu ersehen ist, erstreckt sich der geformte Filterschlauch 23 stromabwärts der Station 13 mit verhältnismäßig stark geneigter Bahnrichtung nach unten in das Innere des Behälters 1.

Beim vorliegenden Beispiel handelt es sich bei dem Filterband 15 um ein folien- oder membranartiges, siegelbares Material (beispielsweise Polyester), so dass die in der Station 13 einander angenäherten Längsränder 21 durch einen Schweiß- oder Siegelvorgang miteinander verbindbar sind. Beim vorliegenden Beispiels ist zu diesem Zweck am Querträger 9 der Station 13 ein Ultraschallgenerator 24 mit einem Schweißkopf 25 vorgesehen, der die Längsränder 21 zur Bildung des geschlossenen Filterschlauches 23 verschweißt.

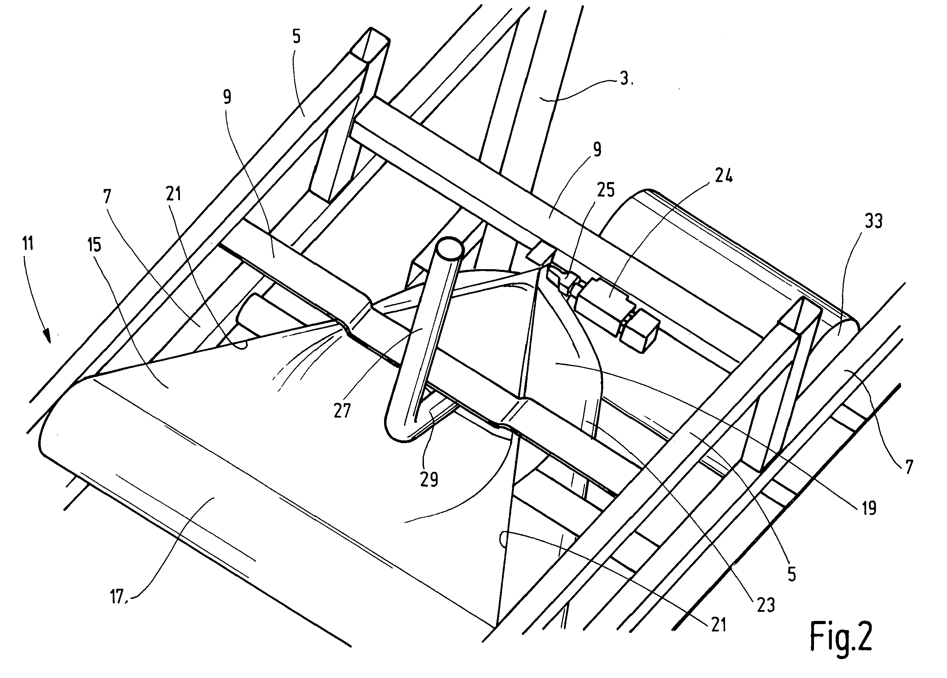

Wie am besten aus Fig. 2 zu ersehen ist, bildet das gewölbte Filterband 15 stromaufwärts der Vereinigungs- oder Schweißstelle eine Art Eingangstrichter, in den das zu filtrierende Medium eingebbar ist. Beim vorliegenden Beispiel ist zu diesem Zweck als Ausgabeeinrichtung für das Medium ein Zuführrohr 27 mit einem abgebogenen Ausgabeende 29 (siehe Fig. 3) vorgesehen, das sich entlang der Bahn des durch die Bandführung 19 gewölbten Filterbandes 15 in den gebildeten Eingangstrichter erstreckt. Durch die gegebene Bahnneigung des sich anschließenden Filterschlauches 23 strömt somit das zu filtrierende Medium in den Filterschlauch 23 ein und in diesem nach unten.

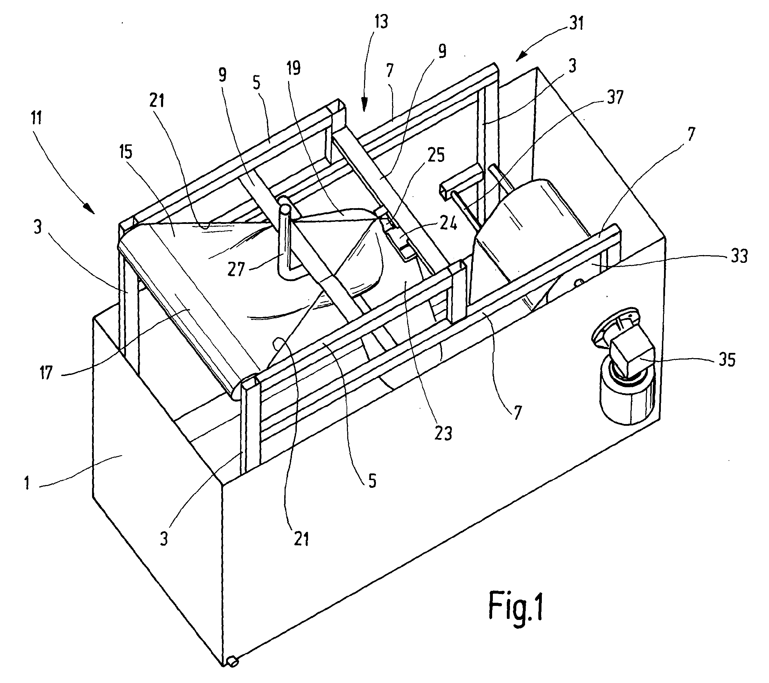

Innerhalb des Behälters 1 ist eine weitere Station 31 angeordnet, die zum einen der Handhabung des Filterschlauches 23 dient, der in seinem Inneren die beim Filtriervorgang abgefilterten Rückstände enthält, und zum anderen die Transportbewegung erzeugt, bei der das Filterband 15 vom Bandwickel 17 abgewickelt, in die Station 13 geführt wird und der darin gebildete Filterschlauch 23 durch den Innenraum des Behälters 1 hindurch zur weiteren Station 31 bewegt wird. Zu diesem Zweck weist die Station 31 eine Aufwickeleinrichtung mit einem Wickelkörper 33 auf, der durch einen an der Behälteraußenseite angeflanschten Getriebemotor 35 so antreibbar ist, dass der Filterschlauch 23 aufgewickelt und dadurch die Transportbewegung erzeugt wird. Wie aus Fig. 1 und 3 zu ersehen ist, wird der Filterschlauch 23 beim Aufwickeln auf den Wickelkörper 33 über eine Führungsstange 37 gezogen, so dass der Schlauchkörper für den Aufwickelvorgang verflacht wird.

Wie bereits erwähnt, kann das Material des Filterbandes 15 anwendungsspezifisch gewählt sein, so dass es beispielsweise für Schwerkraftfiltrierung mit gewünschter Filterfeinheit geeignet ist. Bei innerhalb des Behälters 1 befindlichem Reinfiltrat, dessen Pegelhöhe entsprechend hoch ist, so dass der Filterschlauch 23 im Fluid eingetaucht ist, kann gegebenenfalls auch ein osmotischer Filtrationsvorgang durchgeführt werden, wenn das benutzte Filtermaterial eine Membran entsprechender Permeabilität bildet.

Für die Verbindung der Längsränder 21 des Filterbandes 15 bei der Vereinigung zum geschlossenen Filterschlauch 23 ist beim gezeigten Beispiel eine Schweißeinrichtung vorgesehen. Wenn als Filterband 15 ein Material vorgesehen ist, das nicht oder schlecht siegelbar ist oder an seinen Seitenrändern 21 keine siegelbaren Bereiche aufweist, kann die Verbindung an den Rändern auf beliebige andere Weise erfolgen, beispielsweise durch eine Verklebung oder Verklammerung oder eine Haftverbindung an den Längsrändern 21.

Beim gezeigten Ausführungsbeispiel wird der Filterschlauch 23 als ununterbrochener Strang in der Station 31 aufgewickelt. Es versteht sich, dass die Handhabung des benutzten Filterschlauches 23 alternativ auch in der Weise erfolgen kann, dass aus Längenabschnitten des Filterschlauches 23 abgetrennte, geschlossene Beutel gebildet werden, die stückweise der Vorrichtung entnommen und zur Handhabung entsorgt werden können. Sofern der Filterschlauch 23 als ununterbrochener Strang in der Station 31 aufgewikkelt wird, erlaubt dies auch ein Auspressen von Restflüssigkeit aus dem Filterschlauch, was die Effektivität verbessert und die Filtrierleistung erhöht. In Abhängigkeit des eingesetzten Materiales für den Filterschlauch 23 kann dann dieser von der Aufwickelstation 31 abgenommen, als Ganzes entsorgt, beispielsweise verascht werden. In Abhängigkeit des zu filtrierenden Mediums besteht aber auch die Möglichkeit, durch Abreinigen des Filterschlauches mit erneuter Auftrennung, diesen für eine Wiederverwendung zu recyceln. Bei einer nicht näher dargestellten Ausführungsform der Filtervorrichtung kann auch vorgesehen sein, das bahnförmige Filtermaterial nach Bildung des Filterschlauches und Durchführen der Filtrieraufgabe wieder aufzutrennen und abzureinigen, um dann dergestalt das bahnförmige Filtermaterial in einer geschlossenen Führung an die erste Station 11 weiterzugeben, wo dann derart das Filtermaterial für einen erneuten Filtrierumlauf einsetzbar ist.

Der wannenartig ausgebildete Behälter 1 in der Art eines rechteckförmigen Hohlkastens kann mit einer nicht näher dargestellten Fluidsteuerung derart versehen sein, dass in den Behälter eingebrachtes, abgereingtes Fluid definiert aus dem Behälter für seine Wiederverwendung abführbar ist. Auf diese Art und Weise läßt sich der Behälter niveaumäßig mit dem Filtrat befüllen, und es läßt sich jedenfalls derart ein Niveau im Behälter 1 einregeln, als das der eigentliche Filtriervorgang über den Filterschlauch nicht behindert ist. Insbesondere läßt sich der Behälter 1 noch bodenseitig an der Ablaufstelle mit einem Restentleerungsfilter versehen, so dass hier nochmals ein Nachfiltrationsvorgang des Hauptfiltratstromes möglich wäre. Die Filtervorrichtung als Ganzes läßt sich sehr gut zu sonstigen Maschinen, beispielsweise zu Werkzeugmaschinen beistellen, so dass sich die Filtervorrichtung dann insgesamt zur Abfiltrierung von Kühlschmiermittelflüssigkeiten und dergleichen mehr eignen würde.

Das Filtermaterial besteht vorzugsweise aus einem reißfesten porösen Kunststoff, der auch aus mehreren Lagen zusammen laminierbar ist. Auch kann Kohlefaserwerkstoff - auch als Stützbahn - eingesetzt werden. Ferner sind Vliese oder Gewebe als Filtermaterial einsetzbar, deren Selektivität sich durch Beschichtungen, wie man sie beispielhaft von Osmose-Rohrmembranen her kennt, vorgebbar. Auch ist der Einsatz von Metallgeweben möglich.

## Patentansprüche

1. Filtervorrichtung mit einem bahnförmigen Filtermaterial (15), das in einer ersten Station (11) von einem Vorrat (17) erhältlich und in einer zweiten Station (13) zu einem Filterschlauch (23) fügbar ist, in den über eine Zuführstation (27, 29) das zu filtrierende Medium zuführbar ist, wobei in einer weiteren Station (31) der Filterschlauch (23) zusammen mit den abfiltrierten Rückständen zur weiteren Entsorgung handhabbar ist.

2. Filtervorrichtung nach Anspruch 1, **dadurch gekennzeichnet, dass** die erste Station (11) den Vorrat des Filtermaterials in Form eines Filterbandwickels (17) enthält, von dem das Filterband (15) abwickelbar und der zweiten Station (13) zuführbar ist.

3. Filtervorrichtung nach Anspruch 2, **dadurch gekennzeichnet, dass** die zweite Station (13) eine Bandführung (19) aufweist, die das in seiner Längsrichtung zugeführte Filterband (15) wölbt und dessen Längsränder (21) zur Bildung des Filterschlauches (23) einander annähert.

4. Filtervorrichtung nach Anspruch 3, **dadurch gekennzeichnet, dass** die Zuführstation eine an der zweiten Station (13) befindliche Ausgabeeinrichtung (27, 29) aufweist, über die das zu filtrierende Medium in dem Bereich zugeführt wird, in dem das Filterband (15) durch Annähern seiner Längsränder (21) zum Filterschlauch (23) geformt wird, oder in dem Bereich zugeführt wird, in dem das Filterband (15) durch die Bandführung (19) gewölbt wird.

5. Filtervorrichtung nach einem der Ansprüche 2 bis 4, **dadurch gekennzeichnet, dass** die für die Handhabung des die abfiltrierten Rückstände enthaltenden Filterschlauches (23) vorgesehene weitere Station (31) eine Antriebseinrichtung (33, 35) zur Erzeugung einer Transportbewegung des Filterbandes (15) und Filterschlauches (23) von der ersten Station (11) und durch die zweite Station (13) hindurch aufweist.

6. Filtervorrichtung nach Anspruch 5, **dadurch gekennzeichnet, dass** eine die Transportbewegung erzeugende Aufwickeleinrichtung (33, 35) für den Filterschlauch (23) vorgesehen ist.

7. Filtervorrichtung nach einem der Ansprüche 3 bis 6, **dadurch gekennzeichnet, dass** an der zweiten Station eine Verbindungseinrichtung (24, 25) zum Herstellen einer Verbindung der einander angenäherten Längsränder des den Filterschlauch (23) bildenden Filterbandes (15) vorgesehen ist.

8. Filtervorrichtung nach Anspruch 7, **dadurch gekennzeichnet, dass** eine Schweißvorrichtung (24, 25) zum Verbinden der Längsränder (21) des den Filterschlauch (23) bildenden, thermoplastischen Filterbandes (15) vorgesehen ist.

9. Filtervorrichtung nach Anspruch 7, **dadurch gekennzeichnet, dass** die Verbindungseinrichtung eine Einrichtung zur Bildung einer Verklebung oder Verklammerung oder einer Haftverbindung an den Längsrändern (21) des den Filterschlauch (23) bildenden Filterbandes (15) aufweist.

10. Filtermaterial, insbesondere vorgesehen für eine Verwendung bei einer Filtervorrichtung gemäß einem der Ansprüche 1 bis 9, **dadurch gekennzeichnet, dass** es als bahnförmiges Flächenmaterial (15) vorliegt, dessen gegenüberliegende Längsränder (21) derart ausgebildet sind, insbesondere siegelbare Bereiche oder Haftverschlußelemente aufweisen, dass zur Bildung eines Filterschlauches (23) diese Längsränder (21) miteinander verbindbar sind.
